Europäisches Patentamt

European Patent Office

Office européen des brevets

(11) Publication number: **0 339 171**
**A1**

# EUROPEAN PATENT APPLICATION

(21) Application number: 88830184.3

(51) Int. Cl.⁴: **C08K 5/05 , C08L 67/06**

(22) Date of filing: 29.04.88

(43) Date of publication of application:
**02.11.89 Bulletin 89/44**

(84) Designated Contracting States:
**AT BE CH DE ES FR GB GR IT LI LU NL SE**

(71) Applicant: **STAMICARBON B.V.**
**Mijnweg 1**
**NL-6167 AC Geleen(NL)**

(72) Inventor: **Hartwig, J.**
**via della Libertà 29**
**I-22012 Cernobbio (Como)(IT)**

(54) Styrene emission inhibited unsatured polyester resin composition.

(57) The invention relates to a composition comprising unsaturated polyester, styrene, a catalyst and an additive to reduce the styrene emission for the manufacturing of non-foamed articles and is characterized in that the additive is an alcohol having two to four carbon atoms, preferably isopropanol.

EP 0 339 171 A1

## STYRENE EMISSION INHIBITED UNSATURATED POLYESTER RESIN COMPOSITION

The invention relates to a composition comprising unsaturated polyester, styrene, a catalyst and an additive to reduce the styrene emission for the manufacturing of non-foamed articles.

Unsaturated polyester resin compositions are widely used, especially to make boat hulls, automobile parts etc.

These resin compositions normally use styrene as a reactive solvent. As soon as the resin composition is fully cured, styrene is polymerised and no evaporation occurs. However, during application styrene evaporates. This evaporation is a disadvantage because of health reasons. This is especially a problem if the resins are applied in a hand lay up process.

Several methods are known to reduce the styrene emission e.g. the addition of waxes, long chain alcohols (decanol, norbornene alcohol), alkylaromatics and mixtures thereof. See e.g. EP-A-27666.

None of these methods are completely satisfactory till now, because always a too high styrene emission is found.

Now an additive is found, that allows a further reduction of styrene emission.

The problem is solved, according to the invention, in that the composition comprising unsaturated polyester and styrene comprises as an additive to reduce the styrene emission an alcohol having two to four carbon atoms.

US-A-4.689.352 describes the use of ethanol and isopropanol as a gas-release control agent in the production of foam material.

The production of foam material is disclaimed for the present invention. The present invention relates to resins for the production of non-foamed articles. Non-foamed articles generally have a density larger than 1 kg/l, preferably larger than 1.2 kg/l. Thus, the present invention concerns the application of an alcohol having two to four carbon atoms as a styrene emission inhibitor in the manufacturing of thermosetted polyester articles.

Preferably 2-propanol, 2-butanol, 2-methyl-2-propanol or 2-methyl-1-propanol are used because these alcohols do not evaporate too fast nor too slow. A too fast evaporation gives the risk that these is too much time left for styrene to evaporate. A too slow evaporation causes the risk, that alcohol should stay in the cured product. Such a presence of an alcohol reduces mechanical strength and increases osmose (water take-up).

Particularly preferred is 2-propanol because of outstanding characteristics regarding evaporation speed, and non-toxicity.

The alcohol should be applied in 0.1-8 wt.% with respect to the resin. Preferably between 0.5 and 4 wt.%.

The styrene emission can be further reduced by addition of a film-forming resin, that forms a film after evaporation of the alcohol. For example butyrates or fenolformaldehyde resins, cellulose derivatives, polyamides, siloxanes and polyesters containing oxydative drying groups, appeared to be very useful.

In case a more reactive resin composition is used, which cures fast, styrene emission can be kept low very well, because a precise amount of alcohol can be added. Resins with a longer cure time (e.g. 40 minutes) require higher amounts of alcohol, but still show some evaporation. Especially in these cases, the combination of alcohol with film-forming resin is very useful.

The unsaturated polyester resin can be any resin which can be cured together with styrene by radical polymerisation.

E.g. also polyesters with acrylate derivatives as end groups, the so-called vinyl ester polymers, may be used. Mixtures of polymers may, of course, also be used.

The weight average molecular weight of the polymer is preferably between 500 and 8000, more in particular between 500 and 6000 and most particularly between 700 and 4000.

The acid number of the polymer is usually between 0 and 100, preferably between 0 and 50, in particular between 1 and 25.

The hydroxyl number of the polymer is usually between 0 and 200, preferably between 1 and 100, in particular between 1 and 50. The hydroxyl and acid numbers are defined as mg KOH per gram of polymer, according to ASTM E 222-73 and ASTM D 1639-70, respectively.

The unsaturated polymers are substantially synthesized from organic compounds containing carboxyl and alcohol groups. Usually diacids and dialcohols are used for polyesters; at most 40% of both types of di-functional monomers may, however, be replaced by higher-functional monomers or mono-functional monomers or mixtures hereof. Preferably, less than 20 wt.% of both types of di-functional monomers is replaced by a higher-functional monomer. More in particular, 3-10 wt% of one of the two types of difunctional monomers is replaced by a tri-functional monomer in order to obtain an unsaturated polyester with side-branches. This results in a higher molecular weight in a shorter amount of time.

Preferably, at least one ethylenic unsaturated diacid is used. It may be advantageous to terminate the polyester with an unsaturated monocarboxylic acid.

The vinylester polymers form a special class of polyesters, Vinylester polymers are composed of polyols and, possibly, polyacids terminated with acrylate groups, methacrylate groups or other acrylates substituted with C2-C4 alkyl groups at the $\beta$ position. The polyols may be OH-terminated polyesters, novolak resins, or polyethers, or, for example, semi-esters or polyols modified with epoxy, isocyanate, polyamine, etc.

The acids that may be used usually contain less than 30 carbon atoms, in particular less than 20, more in particular less than 10 carbon atoms.

An $\alpha$, $\beta$-ethylenic unsaturated diacid is preferably used as ethylenic unsaturated diacid, for example a diacid chosen from the group comprising fumaric acid, maleic acid, chlorine maleic acid, itaconic acid, methylglutaric acid, mesaconic acid, citraconic acid or the corresponding esters or anhydrides.

An ethylenic unsaturated mono- or triacid may, for instance, be chosen from the group comprising linolic acid, or the other unsaturated fatty acids, cinnamic acid, atropic acid, acrylic acid, methacrylic acid, ethacrylic acid, propacrylic acid, crotonic acid, isocrotonic acid, or corresponding ester or anhydride derivatives.

Other diacids are preferably saturated aliphatic or aromatic diacids. Aliphatic and aromatic diacids are, for example, chosen from the group comprising succinic acid, glutaric acid, methylglutaric acid, adipic acid, sebacic acid, pimelic acid, phthalic acid, isophthalic acid, terephthalic acid, dihydrophthalic acid, tetrahydrophthalic acid, tetrachlorophthalic acid, 3,6-endomethylene-1,2,3,6-tetrahydrophthalic acid and hexachloro-endomethylenetetrahydrophthalic acid or the corresponding ester or anhydride derivatives.

Preferably, 5-50% aromatic carboxylic acids are used to obtain optimum mechanical properties.

Mono- and/or higher-functional aromatic or aliphatic carboxylic acids are, for example, chosen from the group: benzoic acid, ethylhexane acid, mono- or trimeric fatty acids like stearic acid, acetic acid, propionic acid, pivalic acid, valeric acid, trimellitic acid, 1,2,3,4-butanetetracarboxylic acid, 1,2,4,5-benzenetetracarboxylic acid, 1,4,5,8-naphthalenetetracarboxylic acid, 1,2,3-propanetricarboxylic acid, 1,2,3-butane tricarboxylic acid, camphoric acid, naphthoic acid, toluyl acid, or the corresponding ester or anhydride derivatives.

The alcohols that may be used normally contain less than 30 carbon atoms, in particular less than 20 carbon atoms. Preferably saturated aliphatic alcohols or alcohols containing an aromatic group are used; ethylenic unsaturated alcohols may also be used. Dialcohols are for example chosen from the group: ethylene glycol, di(ethylene glycol), tri(ethylene glycol), 1,2-propanediol, 1,3-propanediol, 1,2-butanediol, 1,3-butanediol, 1,4-butanediol, 2-methyl-1,3-propanediol, 1,4-pentanediol, 1,4-hexanediol, 1,6-hexanediol, 2,2-dimethylpropanediol, cyclohexanediol, 2,2-bis-(hydroxycyclohexyl)-propane, 1,2-trimethylolpropanemonoallylether, pinacol, 2,2,4-trimethylpentanediol-1,3, 3-methylpentanediol-1,5, bisphenol-A ethoxylated or propoxylated with 1-3 equivalents, and novolak prepolymers, if required partially etherified and and ethoxylated. Instead of a 1,2-diol, the corresponding oxirane compound may be used.

Mono- and higher-functional alcohols are, for example, chosen from the group comprising methanol, ethanol, 1- or 2-propanol, 1- or 2-butanol, one of the isomers of pentanol, hexanol, octanol, 2-ethylhexanol, fatty alcohols, benzylalcohols,1,2-di (allyloxy)-3-propanol, glycerol, 1,2,3-propanetriol; pentaerythritol, tris-(hydroxyethyl) isocyanurate and novolak prepolymers, if required partly etherified and ethoxylated. Instead of 1,2-diol, the corresponding oxirane compound may be used.

It is also possible to choose di- and/or higher-functional alcohols with more than 30 carbon atoms. These preferably have molecular weights of less than 5000, more in particular less than 2000, but more than 400. Di- and/or higher-functional alcohols with molecular weights higher than 400 are, for example, chosen from the group comprising polyethylene glycols, polypropylene glycols, addition products of ethylene oxide and/or propylene oxide with bisphenol-A, or phenol-formaldehyde (pre)polymers, preferably epoxidated.

The unsaturated polyester can be modified with dicyclopentadienyl (DCPD) units. This can be an advantage because the latter increases the Tg of the object produced. Preferably an unsaturated polyester with 2-45 wt%, more in particular with 20-35 wt% DCPD is used. The polymer can also be modified with imide- and/or amide groups to further raise the Tg. Diamines and alcohol amines can be used for this purpose.

The polyester can be produced in many ways, for example by melt condensation, solvent condensation with removal of water by means of distillation, whether or not in an azeotropic mixture, by epoxy-acid reactions and other methods known in the art. Vinyl ester polymers can also be produced as described in US-A-3179623, US-A-3301743, US-A-3367992 and US-A-3947422.

Preferably 10-80 wt% polymer is used, in particular 20-70 wt% of the curable mixture.

As the reactive monomer styrene is used, because styrene shows a good performance at a low price.

Styrene can be mixed with a compound containing one or more vinyl groups usually containing less than 50 carbon atoms, preferably less than 30, and more in particular less than 15, but more than 3 carbon atoms. Preferably the compound containing one or more vinyl groups is of the vinyl aromatic, vinyl ether, vinyl ester, acrylate and/or allyl type. More in particular, an acrylate- or vinyl aromatic compound is used, because these react quickly in the polymerization reaction.

Vinyl aromatic compounds are, for example, chosen from the group comprising $\alpha$-methylstyrene, o-, m-, p-methylstyrene, p-chlorostyrene, t-butylstyrene, divinyl benzene, bromine styrene, vinylnaphthalene, $\alpha$-chlorostyrene and divinylnaphthalene.

Acrylate compounds are preferably chosen from the group comprising methyl-, ethyl-, propyl-, isopropyl-, butyl-, isobutyl-, phenyl- or benzylacrylate and -methacrylate, 2-ethylhexyl(meth)acrylate, dihydrodicyclopentadieneacrylate, cyclohexyl(meth)acrylate, butanediol(meth)acrylate, (meth)acrylamide, butanediol(meth)-acrylate, the reaction product of (meth)acrylic acid and phenyl- or cresylglycidyl ethers, propylene glycol di(meth)acrylate, di- and trietylene glycol di(meth)acrylate, di- and tripropylene glycol di-(meth)acrylate, hexanedioldi(meth)acrylate, trimethylolpropane-tri(meth)acrylate. Derivatives of acrylates substituted with $C_2$-$C_4$ at positions $\beta$ can also be used.

Vinyl ether, vinyl ester and allyl compounds are, for example, chosen from the group comprising allyl phthalate, triallyl cyanurate, diallyl isophthalate, diallyl terephthalate, diallyl phthalate, ethylhexanoic acid vinyl ester, vinyl acetate, vinyl propionate, vinyl pivalate, vinyl ether, vinyl propylol ether, vinyl butylol ether and vinyl benzyl alcohol ethers.

Preferably, styrene, optionally together with a compound containing one or more vinyl groups is used in 20-90 wt%, in particular 30-80 wt% of the curable mixture.

In addition, the resin preferably contains one or more antioxidants like hydroxybenzophenone, esters of salicylic acid and hydroxyphenylbenzotriazoles.

The curable mixture preferably contains releasing agents such as e.g. stearates.

In addition, the curable mixture preferably also contains 0. 005- 0.2, preferably 0.01-0.1 wt% with respect to the curable mixture, of one or more inhibitors. Known inhibitors that may be used are: hydroquinone, 2,6-dimethylhydroquinone, p-t-butylcatechol, p-benzoquinone, chloranil, 2,6-dimethylquinone, nitrobenzene, m-dinitrobenzene, thiodiphenylamine, salts of N-nitro-N-cyclohexylhydroxylamine, 2,3-dichloro-5,6-dicyano-p-benzoquinone, copper naphthenate, 1 ,2-naphthoquinone.

The radical polymerization in the mould.can be initiated in many ways, for example with a chemical initiator system, but also with an electron beam gun. The chemical initiator system is based on the generation of radicals via thermal, catalytic or photochemical decomposition.

A photo-initiator system can be used, because this can effect controlled and rapid curing. Many types of photo-initiator system may be used, such as those described in, for example, DE-A-1694149, US-A-3715293, EP-A-7086, US-A-4071424, EP-A-185423 and EP-A-97012. Photoinitiator systems are usually used in amounts between 0.01 and 10 wt%, preferably between 0.1 and 4 wt%, photoinitiator systems are used.

Preferably a system sensitive to light with a wavelength of 280-800 nm, preferably 360-500 nm and more in particular 380-460 nm, is used.

However, a thermally sensitive initiator system, of which 0.1-5 wt% is usually used, is also very suitable, but, in general, it then takes slightly longer for the polymerization to begin. A thermally sensitive initiator system may be cold-setting or hot-setting, and is preferably chosen from the group comprising peroxides, perketals and percarbonates. Examples are hydrogen peroxide, benzoyl peroxide, t-butyl peroxide, t-butyl peroctoate, t-butyl perbenzoate, dicumyl peroxide, di-t-butyl peroxide, trimethylcyclohexanone perketal, methyl ethyl ketone peroxide, acetylacetone peroxide, cyclohexanone peroxide, methyl isobutyl ketone peroxide and diacetone alcohol peroxide. In addition, catalysts may be added, for instance octoates or naphthenates of copper, lead, calcium, magnesium, cerium and in particular of manganese and cobalt, or vanadium complexes. Promotors like acetylacetone may also be added to these accelerators. Aromatic amines such as dimethylaniline, diethylaniline or dimethylparatoluidine may also be used as catalysts.

The resin composition can be very well applied in the production of fibre reinforced products, in hand-lay up or moulding compounds.

As fibre reinforced material can e.e. be applied glass fibres, polyester fibres, acrylic fibres, aramide fibres and carbon fibres. Fibres are used preferably in 30-300 parts by weight with respect to the resin mixture. Glass fibres are used preferably because of a good price: performance ratio, but carbon and/or aramide fibres are used, if special features are wanted. Fibre reinforcing material is generally used as continuous fibres or as fibres with a length between 0,5 mm and 5 cm, optionally in the forms of mats.

A compound can be made from the resin and fillers, optionally with thickeners. Fillers are generally used in 50-500 parts by weight, relatively to the resin. As a filler lime, talc, silicate, gypsum and carbon black are generally applied.

A compound can be thickened by applying metal oxides or hydroxides as MgO and Mg(OH)$_2$ in 1-10 wt.% on the resin mixture. Compounds can also be thickened by butyrate resins, isocyanate thickening reactions and the like.

The invention will be elucidated by the following examples without being limited thereto.

Examples I-III and comparison experiments A-C

Testing method: 50 g of a thermosetting resin was put on a me tallic pan of 201 square cm. The pan was placed on a balance in a protected area without any ventilation. Fast data acquisition was performed by a computer. Temperature was 20° C.

The unsaturated polyester was based on 1 mol maleic acid anhydride, 1 mol of isophthalic acid, 1.25 mol of propylene glycol and 0.9 mol of diethylene glycol. The unsaturated polyester was dissolved in styrene. The viscosity at 25° C at 64% solid in styrene amounted to 1.1 Pa.s. The resin was accelerated with 0.25% cobaltoctoate (6% Cobalt). The catalyst was 2% methylethylketoneperoxide (50%).

In table 1, the results of the effect of isopropanol on styrene emission is shown. It is clear from these data that styrene emission is clearly reduced, achieving the best results at short gel times. The percentage of styrene was in all cases 35%. The gel time of the resin was 15 min.

TABLE 1

| Exp. | gel time of polyester | % styrene in composition | % isopropanol | total gas emission | styrene emission |
|------|------|------|------|------|------|
| A | 10 min | 35 | 0 | 47.5 | 47.5 |
| I | 10 min | 34 | 1 | 50.1 | 25.1 |
| B | 15 min | 35 | 0 | 72.3 | 72.3 |
| II | 15 min | 34 | 1.2 | 74.5 | 41.5 |
| C | 22 min | 35 | 0 | 86.2 | 86.2 |
| III | 22 min | 33.5 | 1.5 | 89.8 | 52.3 |

Examples IV-XIII

The following examples were performed using both an alcohol and a barrier agent. The combination of both agents can reduce the amount of styrene evaporation to 24-33% of the original value, also for this relatively slow curing system.

TABLE 2

| Exp. | % isopropanol | Additive | amount (%) of additive | total gas emission | styrene emission | % emission |
|---|---|---|---|---|---|---|
| IV | 1.50 | Roskydal 500A®* | 10 | 55.7 | 18.2 | 33 |
| V | 1.50 | Roskydal 500A®* | 20 | 49.5 | 12.0 | 24 |
| VI | 1.44 | CAP 504-02®** | 0.36 | 54.4 | 18.4 | 34 |
| VII | 0.96 | CAP 504-02®** | 0.24 | 60.7 | 36.7 | 61 |
| VIII | 1.44 | ethylcellulose | 0.36 | 53.0 | 17.0 | 32 |
| IX | 0.96 | ethylcellulose | 0.24 | 60.8 | 36.8 | 61 |
| X | 0.96 | Reammide®*** | 0.24 | 64.5 | 40.5 | 63 |
| XI | 1.44 | Reammide ®*** | 0.36 | 50.8 | 16.2 | 32 |
| XII | 1.40 | Baysilon OL 31®**** | 0.07 | 51.4 | 16.4 | 32 |
| XIII | 1.40 | Baysilon OL 44®**** | 0.07 | 51.0 | 16.0 | 31 |

* Roskydal 500A® is a polyester containing oxydative drying
** CAP 504-02® is a cellulose derivative.
*** Reammide® is an alcohol soluble polyamide.
**** Baysilon is a recoatable polyether modified methylpolysiloxane.

## Claims

1. Composition comprising unsaturated polyester, styrene, a catalyst and an additive to reduce the styrene emission for the manufacturing of non-foamed articles, characterized in that the additive is an alcohol having two to four carbon atoms.

2. Composition according to claim 1, characterized in that the alcohol is 2-propanol, 2-butanol, 2-methyl-2-propanol or 2-methyl-1-propanol.

3. Composition according to claim 2, characterized in that the alcohol is 2-propanol.

4. Composition according to anyone of claims 1-3, characterized in that 0.1-8 wt.% of alcohol with respect to the resin is applied.

5. Composition according to claim 4, characterized in that 0.5-4 wt.% of alcohol is applied.

6. Composition according to anyone of claims 1-5, characterized in that the composition further comprises a film-forming polymer.

7. Composition according to claim 6, characterized in that the film-forming polymer is a butyrate,phenol-formaldehyde resin, cellulose derivative, polyamide, siloxane or polyester containing oxydative drying groups.

8. Composition for the production of articles with a density larger than 1 kg/l comprising unsaturated polyester, styrene, a catalyst and an additive, characterized in that the additive is an alcohol having two to four carbon atoms.

9. Application of an alcohol having two to four carbon atoms as a styrene emission inhibitor in the manufacturing of thermosetted polyester articles.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A,D | US-A-4 689 352 (O. TITTI et al.) <br> * Claims; column 2, lines 11-16 * <br> --- | 1 | C 08 K 5/05 <br> C 08 L 67/06 |
| A,D | EP-A-0 027 666 (UNILEVER) <br> * Claim 1; page 6, examples II,III * <br> ----- | 1 | |
| | | | **TECHNICAL FIELDS SEARCHED (Int. Cl.4)** <br><br> C 08 K <br> C 08 L |

The present search report has been drawn up for all claims

| Place of search | Date of completion of the search | Examiner |
|---|---|---|
| THE HAGUE | 02-12-1988 | HOFFMANN K.W. |